# EUROPÄISCHE PATENTSCHRIFT

(11) **EP 0 985 488 B1**
(45) Veröffentlichungstag und Bekanntmachung des Hinweises auf die Patenterteilung: **08.09.2004**
(21) Anmeldenummer: 99116387.4
(22) Anmeldetag: 20.08.1999
(51) Int. Cl.: B23Q 3/06

(54) **Mehrfach-Spannvorrichtung**
Clamping device for multiple workpieces
Dispositif de serrage pour pièces multiples

(30) Priorität: 08.09.1998 DE 19840942
(43) Veröffentlichungstag der Anmeldung: 15.03.2000
(73) Patentinhaber: Albeck GmbH, 71336 Waiblingen-Neustadt (DE)
(72) Erfinder: Gruber, Karl-Heinz, 73635 Rudersberg (DE); Albeck, Bernhard, 73547 Lorch-Waldhausen (DE)
(74) Vertreter: Patentanwälte Rüger, Barthelt & Abel

(56) Entgegenhaltungen:
- DE-U- 9 307 196
- GB-A- 1 077 505
- US-A- 2 793 865

## Beschreibung

Die Erfindung betrifft eine Mehrfach-Spannvorrichtung für mehrseitig zu bearbeitende Werkstücke, mit einem länglichen, im Querschnitt polygonalen Werkstückträger, der wenigstens zwei parallel zu seiner Längsmittelachse verlaufende Aufspannflächen trägt und an wenigstens einer Seite in ortsfesten Lagermitteln um seine Längsmitcelachse drehbar gelagert ist, gemäß dem Oberbegriff des Anspruchs 1, wie z.B. aus der DE-U-9307196.5 bekannt.

Bei der spanenden Bearbeitung von gleichen Werkstücken in kleinen, mittleren oder großen Serien in CNC-Bearbeitungszentren oder in mehrspindligen Sondermaschinen steht die Frage der Steigerung der Effektivität in zunehmenden Maße im Vordergrund. Das bedeutet, dass Anstrengungen unternommen werden, die Ausnutzung dieser CNC-Bearbeitungszentren und Sondermaschinen optimal zu steigern, um damit die Kosten pro Werkstück abzusenken. Gleichzeitig wird versucht, zur Einsparung von Kosten bei der Geräteentwicklung im steigenden Umfang Komponenten zu verwenden, die aus möglichst einbaufertigen, spritzgegossenen oder gepressten Werkstücken bestehen, die eine möglichst geringe spanende Nachbearbeitung erforderlich machen. Das bedeutet, dass an solchen Werkstücken häufig nurmehr einzelne Passungen bearbeitet werden müssen, mit der Folge, dass die eigentlichen Bearbeitungszeiten für die Werkstücke relativ kurz werden. Damit werden aber die Nebenzeiten bei der Bearbeitung, d.h. die Zeiten für das Zuführen, Aufspannen, gegebenenfalls Umspannen, Abführen, etc. der Werkstücke zu einem immer wichtigeren Kostenfaktor.

Gerade CNC-Bearbeitungszentren und Sondermaschinen zeichnen sich heute durch einen hohen Entwicklungsstand aus, der es erlaubt, höchste Qualitätsansprüche zu erfüllen. Um die von der Maschinenseite mögliche Präzision bei dem Bearbeitungsvorgang auch auf dem Werkstück zu verwirklichen, muss dieses einwandfrei lagerichtig fest aufgespannt werden. Häufig kann den hohen Qualitätsanforderungen nur dadurch genügt werden, dass auch komplizierte Werkstücke in nur einer Aufspannung fertig bearbeitet werden, um so auch kleine, durch ein Umspannen des Werkstückes bedingte, Lagefehler zu vermeiden.

In der Praxis sind eine Reihe von unterschiedlichen Werkstückspannvorrichtungen für CNC-Bearbeitungszentren und Sondermaschinen bekannt geworden, die für die Bearbeitung von Klein-, Mittel- oder Großserien es gestatten Werkstücke in einer vorbestimmten Menge und Anordnung gemeinsam aufzuspannen und zu bearbeiten. Bei einer bestimmten Art solcher Mehrfach-Spannvorrichtungen ist ein balkenförmiger Werkstückträger von quadratischer Querschnittsgestalt vorgesehen, der um seine Längsmittelachse drehbar, beidseitig in ortsfesten Lagerböcken gelagert und auf einer Seite mit einem Rundschalttisch verbunden ist. Auf seinen vier Seiten trägt der Werkstückträger jeweils eine Aufspannfläche, auf der Aufnahmen, für bspw. vier jeweils in einer Reihe angeordnete Werkstücke vorhanden sind. Der Rundschalttisch gestattet es den Werkstückträger um seine Längsmittelachse über einen vorbestimmten Winkelwert weiterzuschalten und die auf den Aufspannflächen in den Aufnahmen reihenweise gespannten Werkstücke in eine Bearbeitungsposition zu bringen, in der die Werkstücke lagerichtig zu den jeweiligen Bearbeitungsspindeln und Werkzeugen stehen. Diese Spannvorrichtungen erlauben jedoch nur eine 3-Seitenbearbeitung der Werkstücke. Werkstücke, die eine Bearbeitung auf mehr als drei Seiten benötigen, müssen umgespannt und, bspw. in einem weiteren nachgeschalteten eigenen CNC-Bearbeitungszentrum, fertig bearbeitet werden. Das Umspannen der Werkstücke ist zeitaufwendig und birgt, wie erwähnt, die Gefahr des Auftretens von Lagefehlern in sich.

Um eine 4- oder 5-Seitenbearbeitung von Werkstücken in eine Aufspannung zu ermöglichen, sind auch schon Mehrfach-Spannvorrichtungen bekannt geworden, bei denen auf einen um eine Längsmittelachse drehbar gelagerten, länglichen Werkstückträger bis zu vier Rundschalttische in einer Reihe nebeneinanderliegend angeordnet sind, die die Werkstücke aufnehmen und die von einer Be- und Entladestation in eine Bearbeitungsstation verschwenkt und nach dem Abschluss des Bearbeitungsvorgangs wieder in die Beund Entladestation zurück geschwenkt werden können. Die Rundtische sind dabei mit einem gemeinsamen Antriebssystem verbunden, das es gestattet, die auf den Rundtischen gespannten Werkstücke in der Bearbeitungsstation in die jeweils geforderten unterschiedlichen Einstelllagen zu den Werkzeugen zu bringen. Diese Spannvorrichtungen ermöglichen jedoch nur das gleichzeitige Spannen einer begrenzten Anzahl von Werkstücken. Der Schwenkbereich des die Rundtische tragenden Werkstückträgers ist meist auf weniger als 360 Winkelgrade beschränkt. Zudem erfordern diese Vorrichtungen in der Regel einen eigenen Antrieb und zusätzliche Achssteuerungen, so dass sie nicht ohne größere Umbauten in vorhandene CNC-Bearbeitungszentren oder Sondermaschinen eingebaut werden können. Auch ist eine wirtschaftliche Bearbeitung der Werkstücke nur begrenzt möglich. Aus diesem Grunde wird in der Praxis auf eine mehr als 3-Seitenbearbeitung der Werkstücke häufig verzichtet und lieber auf eine 3-Seitenbearbeitung zurückgegriffen, um so eine größere Anzahl von Werkstücken gleichzeitig spannen zu können. Der dadurch bedingte Nachteil, die Werkstücke mindestens einmal umspannen zu müssen, wird bei diesen, mit Balken oder würfelförmigen Werkstückträgern arbeitenden Spannvorrichtungen, wie sie eingangs kurz erläutert wurden, in Kauf genommen.

Ausgehend von diesem Stand der Technik liegt der Erfindung die Aufgabe zugrunde, eine Mehrfach-Spannvorrichtung zu schaffen, die eine mehr als 3-seitige Bearbeitung einer größeren Anzahl von Werkstücken in einer Aufspannung ermöglicht und die sich durch einen einfachen, betriebssicheren Aufbau auszeichnet, der einen Einsatz der Spannvorrichtung in vorhandenen CNC-Bearbeitungszentren und Sondermaschinen etc. ohne Umbaumaßnahmen erlaubt.

Zur Lösung dieser Aufgabe weist die erfindungsgemäße Mehrfach-Spannvorrichtung die Merkmale des Patentanspruchs 1 auf.

Bei der neuen Mehrfach-Spannvorrichtung sind an einem im Querschnitt polygonalen, länglichen Werkstückträger, der an wenigstens an einer Seite in ortsfesten Lagermitteln um seine Längsmittelachse drehbar gelagert ist, wenigsten 2 - in der Regel 4 - parallel zu seiner Längsmittelachse verlaufende Aufspannflächen vorhanden. Auf jeder Aufspannfläche sind wenigstens zwei Drehtische in einer Reihe nebeneinander derart angeordnet, dass die Drehachsen der einer Aufspannfläche zugeordneten Drehtische jeweils in einer gemeinsamen, zu der Längsmittelachse des Werkstückträgers parallelen oder diese enthaltenden Ebene liegen. Damit kann eine verhältnismäßig große Anzahl von Werkstücken in den Bearbeitungsstationen gleichzeitig bearbeitet werden, deren Anzahl und räumliche Lage durch die Zahl der Aufspannflächen des Werkzeugträgers bestimmt ist. Die Drehtische erlauben es, die Werkstücke jeder Aufspannfläche in den einzelnen Bearbeitungsstationen gleich ausgerichtet in die jeweils erforderliche räumliche Ausrichtung zu den Werkzeugen dieser Bearbeitungsstation zu bringen, in der sie, ebenso wie der Werkstückträger während der Bearbeitung exakt lagerichtig fixiere sind. Dadurch dass der Werkstückträger, und damit die Werkstücke immer im gleichen Drehsinn von Bearbeitungsstation zu Bearbeitungsstation weiter geschaltet werden und jede Aufspannfläche eine Be- und Entladestation durchläuft, ergeben sich sehr kurze Nebenzeiten, wobei eine Bearbeitung in einer Aufspannung auf allen Seiten bis auf die Auflagefläche des Werkstücks möglich ist.

Alle Drehtische der Mehrfachspannvorrichtung sind durch Getriebemittel miteinander und mit einer gemeinsamen Antriebsquelle formschlüssig gekuppelt, womit einerseits sichergestellt ist, dass alle Werkstücke immer die gleiche räumliche Ausrichtung aufweisen, während andererseits der konstruktive Aufwand für die Erzeugung der Drehbewegung der Drehtische auf ein Minimum reduziert werden kann. Dazu trägt der Umstand bei, dass die Getriebemittel in Pbhängigkeit von einer Drehbewegung des Werkstückträgers um seine Längsmittelachse relativ zu den ortsfesten Lagerteilen derart antreibbar sind, dass alle Drehtische um ihre jeweilige Drehachse um einen Drehwinkel verdreht werden, der zumindest näherungsweise in einem festen Verhältnis zu dem Drehwinkel steht, um den der Werkstückträger um seine Längsmittelachse gedreht wird, um die Aufspannflächen mit ihren Werkstücken von der einen zu der jeweils nächstfolgenden Bearbeitungsstation weiterzuschalten.

In einer bevorzugten Ausführungsform weist die gemeinsame Antriebsquelle der neuen Mehrfach-Spannvorrichcung ein zentrales Antriebszahnrad auf, mit dem die Getriebemittel in Eingriff stehen und das relativ zu den Lagemitteln des Werkstückträgers drehfest fixierbar ist, wobei der Werkstückträger relativ zu dem Antriebszahnrad verdrehbar ist. Dabei kann die Anordnung derart getroffen sein, dass das drehbar gelagerte Antriebszahnrad durch eine gesteuerte Feststelleinrichtung drehfest fixierbar ist.

Diese Ausbildung der Mehrfach-Spannvorrichtung zeichnet sich durch einen sehr geringen Platzbedarf für die gemeinsame Antriebsquelle der Drehtische aus und gestattet einen besonders einfachen Einbau der Spannvorrichtung in ein vorhandenes CNC-Bearbeitungszentrum. Bei einem räumlich drehfest gehaltenem Antriebszahnrad braucht lediglich der mit dem Werkstückträger gekuppelte Rundschalttisch des CNC-Bearbeitungszentrums den Werkstückträger um einen zum Weiterschalten von Bearbeitungsstation zu Bearbeitungsstation erforderlichen Winkelwert um seine Längsmittelachse zu drehen. Bei dieser Drehbewegung des Werkstückträgers werden über die mit dem Antriebszahnrad in Eingriff stehenden Getriebemittel alle Drehtische gleichzeitig um ihre jeweilige Drehachse um den gleichen vorbestimmten Winkelwert gedreht, dessen Größe von dem Übersetzungsverhältnis zwischen den Getriebemitteln und dem Antriebszahnrad abhängt. Die formschlüssigen Getriebemittel können so ausgebildet sein, dass sie unmittelbar die lagefeste Positionierung der Drehtische in der jeweiligen Bearbeitungsstation übernehmen. Dazu können die Getriebemittel bei entsprechender Ausbildung bspw. mit vorgespannten Zahnradgetrieben, Schneckengetrieben, etc. eine hohe Lagegenauigkeit der Werkstücke während der Bearbeitung gewährleisten.

Ist das Antriebszahnrad drehbar gelagert und wie erwähnt durch eine gesteuerte Feststelleinrichtung drehfest fixierbar, so eröffnet sich die Möglichkeit das Antriebszahnrad freizugeben, sowie der Werkstückträger seine Schaltbewegung abgeschlossen hat und verriegelt ist. Das erlaubt es bspw. durch eine an dem CNC-Bearbeitungszentrum vorhandene Drehvorrichtung einen Drehtisch um einen vorbestimmten Winkelwert zu verdrehen, womit gleichzeitig alle Drehtische die gleiche Winkelverdrehung erfahren und sodann alle Drehtische in der neuen Winkellage dadurch zu arretieren, dass die Feststelleinrichtung das Antriebszahnrad wieder drehfest verriegelt.

Dem Antriebszahnrad kann auch eine eigene Antriebseinrichtung zugeordnet sein, durch die es unter Antrieb aller Drehtische relativ zu dem Werkstückträger in Umdrehung versetzbar ist. Dies erlaubt es, die Werkstücke bei bestimmten Bearbeitungsvorgängen um die Drehachse ihrer Rundtische umlaufen zu lassen und damit eine weitere Bearbeitungsachse zur Verfügung zu haben. Die eigene Antriebseinrichtung kann auch dazu verwendet werden die Drehtische bei ortsfest verriegeltem Werkstückträger gemeinsam in eine vorbestimmte Winkelstellung zu überführen, so dass bspw. nacheinander verschiedene, räumlich gegeneinander versetzte Bohrungen, etc. angebracht werden können.

Jedem Drehtisch kann eine formschlüssige Verriegelungseinrichtung an dem Werkstückträger zugeordnet sein, durch die er in einer vorgegebenen Drehwinkelstellung relativ zu dem Werkstückträger lagegenau verriegelbar ist, was den Vorteil mit sich bringt, dass die Positionierung der Drehtische unabhängig von einem etwaigen Spiel der Getriebemittel ist. In diesem Falle können die Getriebemittel besonders einfach aufgebaut werden, wobei es auch möglich ist Zahnriemengetriebe und dergleichen Getriebeelemente, die prinzipbedingt gewisse Toleranzen aufweisen, einzusetzen. Die Getriebemittel brauchen die Drehtische jeweils nur in die Nähe der jeweiligen Soll-Position zu drehen; die präzise Positionierung, relativ zu dem Werkstückträger, können entsprechende Verriegelungselemente der formschlüssigen Verriegelungseinrichtung übernehmen. Das lässt sich in besonders einfacher, wirksamer weise dadurch erreichen, dass die Verriegelungseinrichtung eine Hirthverzahnung aufweist, deren Elemente bei jedem Drehtisch durch eine relative Axialbewegung in und außer Eingriff gebracht werden können. Bei der erwähnten Ausführungsform mit drehbar gelagertem und durch eine gesteuerte Feststelleinrichtung drehfest fixierbarem, gemeinsamen Antriebszahnrad bedeutet dies, dass der Rundschalttisch des CNC-Bearbeitungszentrums den Werkstückträger bei gelösten Verriegelungseinrichtungen der Drehtische und ortsfest fixiertem Antriebszahnrad jeweils um den vorgegebenen Winkelwert weiterschaltet, wobei alle Drehtische um ihre jeweilige Drehachse in gleichem Maße verdreht werden. Nach dem Fixieren des Werkstückträgers wird das Antriebszahnrad gelöst, sodass die nunmehr betätigten Verriegelungseinrichtungen die Drehtische, unbehindert von dem Antriebszahnrad, in die jeweils exakte Drehwinkelposition überführen und in dieser hochpräzise verriegeln können.

Um sicherzustellen, dass der Bearbeitungsvorgang der Werkstücke erst dann aufgenommen wird, wenn nach einer Schaltbewegung des Werkstückträgers alle Drehtische durch ihre Verriegelungseinrichtungen exakt lagerichtig verriegelt sind, ist es zweckmäßig, dass allen Drehtischen eine zentrale Abfrageeinrichtung zugeordnet ist, durch die der Verriegelungszustand aller Drehtische gemeinsam abfragbar ist. Diese Abfrageeinrichtung kann in einer besonders betriebssicheren und platzsparenden Ausführungsform derart aufgebaut sein, dass sie eine in dem Werkstückträger längsverschieblich gelagerte Stange aufweist, die mit stellungsabhängig von den den Drehtischen oder deren Verriegelungseinrichtungen gesteuerten Abfragelementen an den einzelnen Drehtischen zusammenwirkt.

Vorteilhafte Weiterbildungen der neuen Mehrfach-Spannvorrichtung sind Gegenstand von Unteransprüchen.

Die neue Mehrfach-Spannvorrichtung kann abhängig von der Art der Mehrstationen-Bearbeitungsmaschine, bei der sie eingesetzt ist, mit vertikaler oder horizontaler Betriebslager der Längsmittelachse ihres Werkstückträgers arbeiten.

In der Zeichnung ist ein Ausführungsbeispiel des Gegenstandes der Erfindung dargestellt. Es zeigen:

Es zeigen:
- Figur 1: eine Mehrfach-Spannvorrichtung gemäß der Erfindung, in perspektivischer Darstellung,
- Figur 2: die Mehrfach-Spannvorrichtung nach Figur 1, mit teilweise abgenommenen Drehtischen, in einer entsprechenden perspektivischen Darstellung,
- Figur 3: die Mehrfach-Spannvorrichtung nach Figur 1, im axialen Längsschnitt, in einer Seitenansicht im Ausschnitt, unter Veranschaulichung ihrer Antriebseinrichtung, in einem anderen Maßstab,
- Figur 4: die Mehrfach-Spannvorrichtung nach Figur 1, im axialen Längsschnitt, in einer Seitenansicht im Ausschnitt, unter Veranschaulichung ihrer Abfrageeinrichtung, in einem anderen Maßstab,
- Figur 5: die Mehrfach-Spannvorrichtung nach Figur 1, geschnitten längs der Linie V-V der Figur 4, in einer Seitenansicht,
- Figur 6: die Mehrfach-Spannvorrichtung nach Figur 1, geschnitten längs der Linie VI-VI, im axialen Längsschnitt in einer Seitenansicht, im Ausschnitt unter Veranschaulichung von zwei einander gegenüberliegenden Drehtischen, in einem anderen Maßstab,
- Figur 7: die Abfragelemente von vier Drehtischen der Mehrfach-Spannvorrichtung nach Figur 1, in perspektivischer Darstellung und in einem anderen Maßstab, und
- Figur 8: ein Abfragelement nach Figur 7, in einer perspektivischen Einzeldarstellung.

In einigen Figuren sind einzelne Teile lediglich der besseren Übersichtlichkeit wegen kreuzschraffiert dargestellt. Damit ist nichts über den Werkstoff ausgesagt, aus dem die Teile hergestellt sind.

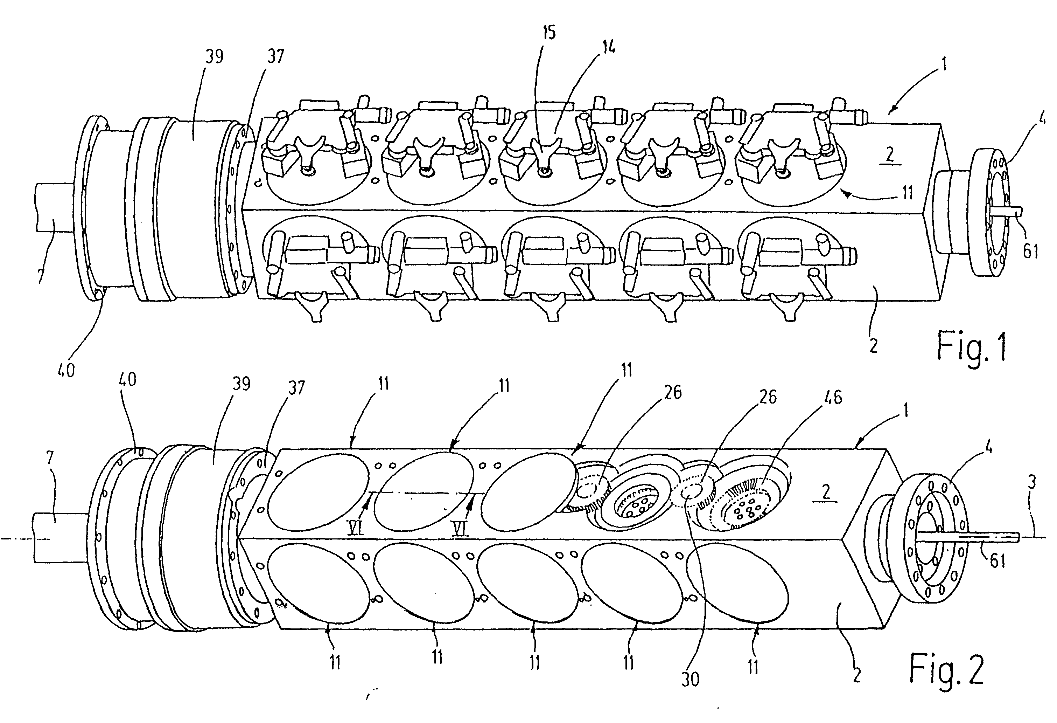

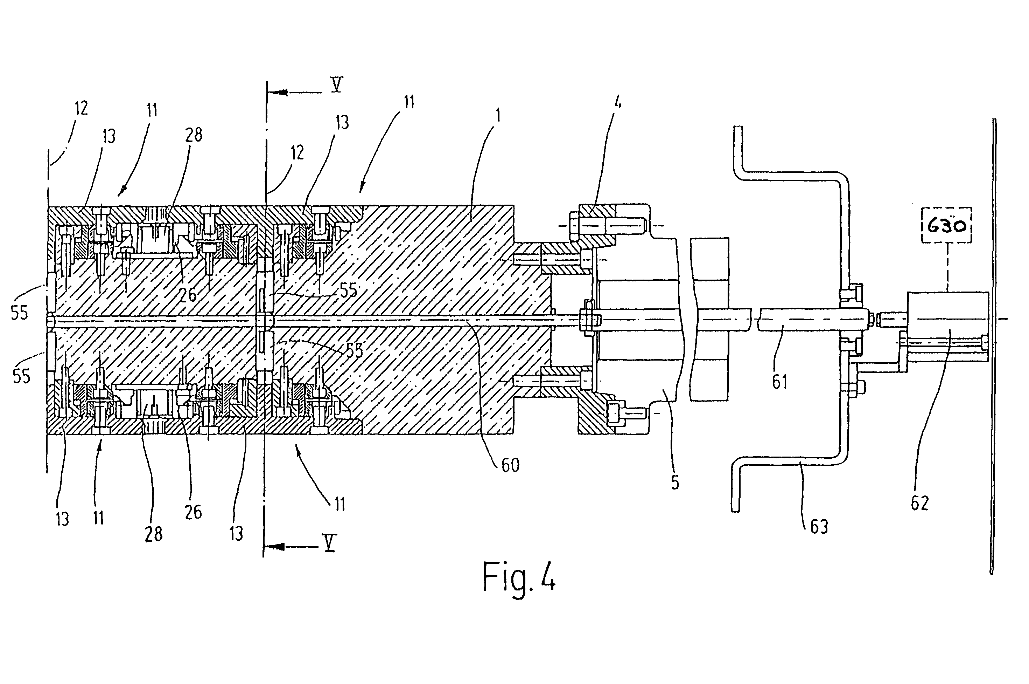

Die neue Mehrfach-Spannvorrichtung weist, wie insbesondere aus den Figuren 1, 2 zu ersehen, einen länglichen, im Querschnitt quadratischen, balkenartigen Werkstückträger 1 auf, dessen vier paarweise zueinander parallele Seitenflächen Aufspannflächen 2 bilden. Der Werkstückträger 1 der auch eine andere polygonale Querschnittsform, bspw. der Gestalt eines Rechtecks, eines gleichseitigen Dreiecks, eines Sechsecks etc. haben kann, trägt auf seiner einen Stirnseite einen koaxial zu seiner Längsmittelachse 3 angeordneten aufgeschraubten Verbindungsflansch 4, mit dem er in der aus Figur 4 ersichtlichen Weise mit einem Aufnahmezapfen 5 eines nicht weiter dargestellten CNC-Bearbeitungszentrums verbunden ist. Dem Aufnahmezapfen 5 wird von einer nicht dargestellten Rundschalteinrichtung des CNC-Bearbeitungszentrums eine Drehoder Schaltbewegung um die Längsmittelachse 3 erteilt, die es erlaubt, den Werkstückträger 1 um seine Längsmittelachse 3 so zu drehen, dass seine Aufspannflächen 2 jeweils auf die Werkzeuge einzelner, rings um die Mehrfach-Spannvorrichtung verteilt angeordneter Bearbeitungsstationen ausgerichtet werden, wie dies bei CNC-Bearbeitungszentren bekannt ist.

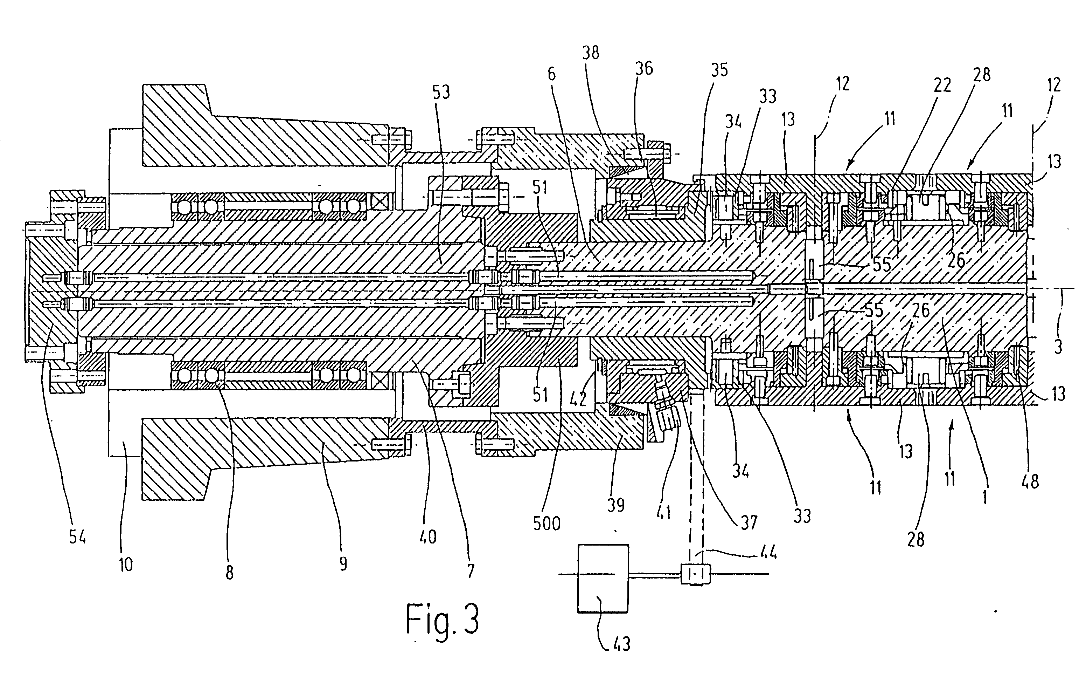

Auf seiner gegenüberliegenden Stirnseite ist der Werkstückträger 1 mit einem in Figur 3 veranschaulichten koaxialen Aufnahmeflansch 500 verschraubt, der einen angeformten koaxialen zylindrischen Lagerzapfen 6 des Werkstückkörpers 1 mit einem koaxialen zylindrischen Lagerteil 7 drehfest verbindet. Das Lagerteil 7 ist über Wälzlager 8 und eine Lagerbüchse 10 in einer einen Bestandteil des CNC-Bearbeitungszentrums bildenden, ortsfesten Lageraufnahme 9 drehbar gelagert. Der Aufnahmezapfen 5 (Figur 4) und die Lageraufnahme 9 (Figur 3) des CNC-Bearbeitungszentrums bilden ortsfeste Lagermittel, in denen der Werkstückkörper 1 um seine Längsmittelachse 3 um 360° drehbar gelagert ist. Abhängig von der Bauart des CNC-Bearbeitungszentrums kann die Längsmittelachse 3 horizontal oder vertikal ausgerichtet sein.

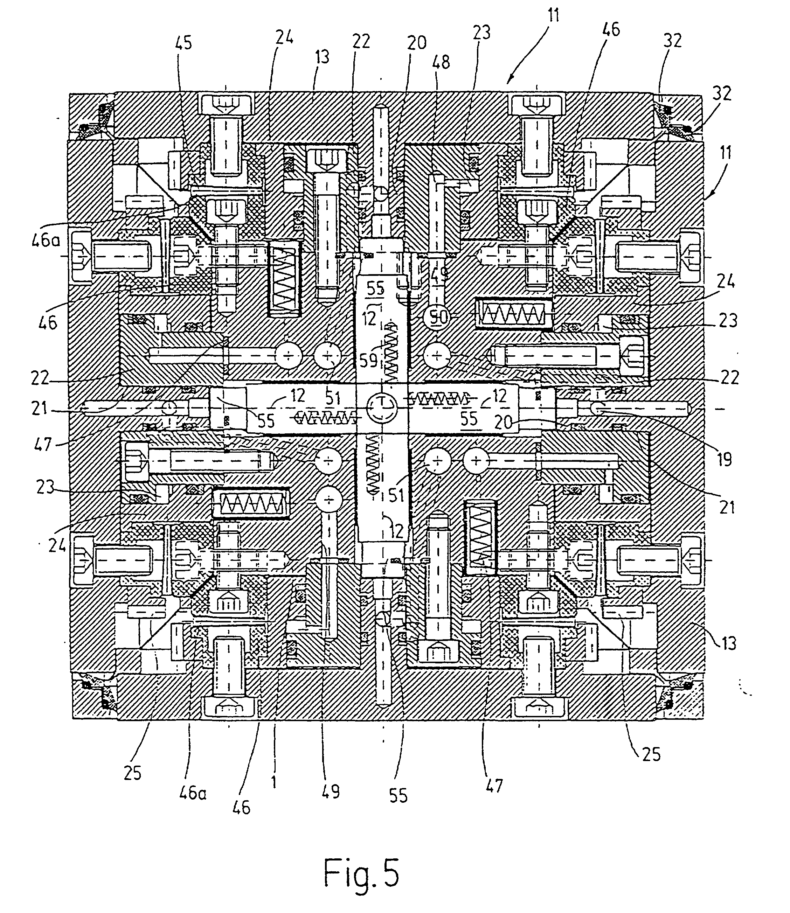

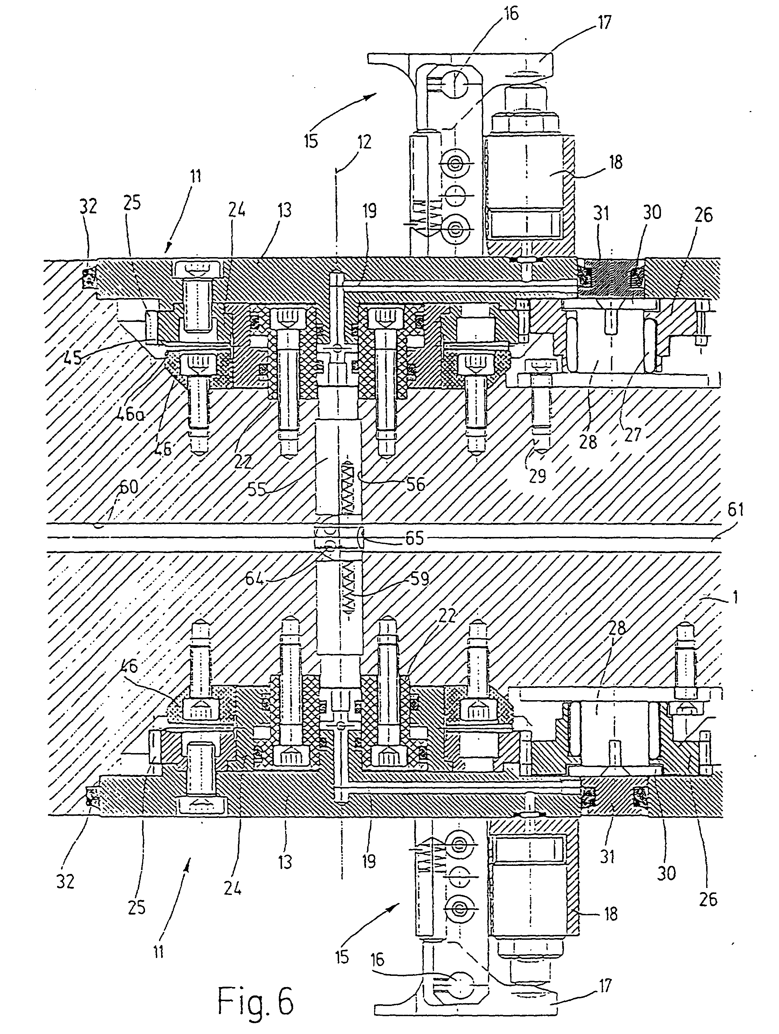

An dem Werkstückkörper 1 sind bei dem dargestellten Ausführungsbeispiel zwanzig Drehtische 11, jeweils um ihre Drehachse 12 (vergleiche Figur 5) drehbar gelagert. Jeder der einen scheibenförmigen Aufnahmeteller 13 aufweisenden Drehtische 11 ist zur Aufnahme von zu bearbeitenden Werkstücken eingerichtet, wie sie bspw. bei 14 in Figur 1 angedeutet sind. Er trägt bei dem dargestellten Ausführungsbeispiel zur Spannung des jeweiligen Werkstücks 14 eine hydraulische Spannvorrichtung 15, die, wie aus Figur 6 zu entnehmen, einen um eine tellerfeste Achse 16 schwenkbaren Spannhebel 17 aufweist, der durch einen Hydraulikzylinder 18 verschwenkt werden kann. Die Hydraulikversorgung des Hydraulikzylinders 18 erfolgt jeweils über in dem Aufnahmeteller 13 angeordnete Druckmediumskanäle 19, deren Druckmediumsversorgung mit einzelnen noch erläutert werden wird.

Auf jeder der Aufspannflächen 2 sind jeweils fünf Drehtische 11 in einer Reihe in gleichen Abständen voneinander angeordnet, wobei, wie bspw. die Figuren 3, 4 zeigen, jeweils die Drehachsen 12 der Drehtische 11 einer Reihe in einer gemeinsamen Ebene liegen, die in den Figuren 3, 4 die Papierebene ist und die die Längsmittelachse 3 des Werkstückträgers 1 enthält. Wie aus Figur 1 und 5 zu entnehmen, liegen immer vier Drehtische der vier Aufnahmeflächen 2 in einer gemeinsamen Querebene, die rechtwinklig zu der Längsmittelachse 3 des Werkstückträgers 1 verläuft.

Der Aufnahmeteller 13 jedes der Drehtische 11 ist mittels eines angeformten koaxialen Lagerzapfens 20, in der bspw. aus Figur 5 zu entnehmenden Weise, in einer entsprechenden Lagerbohrung 21 eines mit dem Werkstückträger 1 abgedichtet verschraubten Kolbens 22 um 360° drehbar gelagert. Der Kolben 22 ist unter Ausbildung eines Zylinderraumes 23 von einer als Zylinder wirkenden, gegen ihn abgedichteten Gleitbüchse 24 umgeben, die an ihrem Umfang mit einer Stirnverzahnung 25 versehen ist, die auch an einem mit der Gleitbüchse 24 verbundenen Zahnring ausgebildet sein kann. Die Gleitbüchse 24 ist an dem Aufnahmeteller angeschraubt.

Zwischen benachbarten Drehtischen 11 einer Reihe ist, wie am besten aus den Figuren 2 und 6 zu entnehmen, jeweils ein Zwischenzahnrad 26 angeordnet, das über ein Nadellager 27 auf einem zylindrischen Lagerbolzen 28 drehbar gelagert ist, der bei 29 mit dem Werkstückkörper 1 verschraubt ist. Eine auf den Lagerbolzen 28 aufgeschraubte Anschlagplatte 30 hält das Zwischenzahnrad 26 in axialer Richtung. Der zwischen zwei benachbarten Aufnahmetellern 13 einer Reihe von Drehtischen 11 liegende Zwischenraum ist durch ein Abdeckelement 31 verschlossen, wobei den Drehtellern 13 ringsumlaufende Lippendichtungen 32 zugeordnet sind, um das Eindringen von Verschmutzungen, Spänen etc. in die Lagerung der Aufnahmescheiben 13 zu verhüten.

Die mit den Aufnahmetischen 13 über die Gleitbüchsen 24 verbundenen Verzahnungen 25, in die die jeweils zwischen zwei benachbarten Drehtischen 11 angeordneten Zwischenzahnräder 26 eingreifen, bilden Getriebemittel, die gewährleisten, dass alle Aufnahmeteller 13 einer Reihe von Drehtischen 11 eine zwangsläufig synchronisierte gleiche Drehbewegung um ihre Drehachse 12 ausüben.

Die Stirnverzahnung 25 des der Lageraufnahme 9 benachbarten endständigen Aufnahmeteller 13 jeder Reihe von Drehtischen 11 kämmt mit einem Verbindungszahnrad 33, das auf einem Lagerzapfen 34 des Werkstückkörpers 1 frei drehbar gelagert ist, wie dies aus Figur 3 zu entnehmen ist. Die Verbindungszahnräder 33 der den vier Aufnahmeflächen 2 zugeordneten vier Reihen von Drehtischen 11 stehen mit einem gemeinsamen koaxialen Antriebszahnrad 35 in Eingriff, das als Kronrad ausgebildet und auf dem zylindrischen Lagerzapfen 6 des Werkstückkörpers 1 frei drehbar gelagert ist. Das gemeinsame Antriebszahnrad 35 ist von einer hydraulisch aufweitbaren Klemmhülse 36 umschlossen, die in einem zylindrischen Klemmhülsenträger 37 angeordnet ist, welcher durch einen Spannring 38 gegen einen Halteflansch 39 drehfest verspannt ist. Der Halteflansch 39 ist über ein hülsenförmiges Zwischenstück 40 mit der Lageraufnahme 9 verschraubt.

Die Klemmhülse 36, die über einen Hydraulikanschluß 41 gesteuert mit Druckmedium beaufschlagt werden kann, erlaubt es, das gemeinsame Antriebszahnrad 35 drehfest bezüglich der Lageraufnahme 9 und damit des Maschinengestells der CNC-Bearbeitungseinheit zu fixieren. Sie ist mit dem Antriebszahnrad 35 über einen Sprengring 42 axial unverschieblich verbunden, so dass der Spannring 38 es erlaubt über den Klemmhülsenträger 37 das Antriebszahnrad 35 axial so einzustellen, dass das Zahnspiel mit den vier Verbindungszahnrädern 33 auf ein Minimum reduziert ist.

In einer alternativen Ausführungsform, die in Fig. 3 angedeutet ist, kann das Antriebszahnrad 35 auch mit einer eigenen Antriebseinrichtung, bspw. in Gestalt eines von der Steuereinheit der CNC-Bearbeitungseinheit gesteuerten Elektrogetriebemotors 43, etwa über einen Zahnriementrieb 44 gekuppelt sein. Der Elektrogetriebemotor 43 ist gestellfest angeordnet und erlaubt es, das Antriebszahnrad 35 relativ zu dem Werkstückträger 1 in Umdrehung zu versetzen und damit alle Drehtische 11 gleichzeitig mit der gleichen Winkelgeschwindigkeit anzutreiben. Dies ermöglicht es die Werkstücke 14 bei ihrer Bearbeitung umlaufen zu lassen und damit eine fünfte Bearbeitungsachse zu schaffen. Daneben ist es aber auch möglich das Antriebszahnrad 35 und damit alle Drehtische 11 gemeinsam programmabhängig um vorbestimmte Winkelwerte zu verdrehen, wenn dies im Hinblick auf die jeweilige Bearbeitungssituation der Werkstücke zweckmäßig oder erforderlich ist.

Bei der in der Zeichnung dargestellten Ausführungsform der neuen Mehrfach-Spannvorrichtung ist jedem der Drehtische 11 eine formschlüssige Verriegelungseinrichtung an dem Werkstückträger zugeordnet durch die während der Bearbeitung das gespannte Werkstückes 14 in einer vorgegebenen Drehwinkelstellung relativ zu dem Werkscückträger 1 lagerichtig verriegelbar ist. Die Einzelheiten dieser mechanischen Verriegelungseinrichtung sind am besten aus den Fig. 5, 6 zu ersehen.

Der Aufnahmeteller 13 jedes der Drehtisches 11 ist mit seinem Lagerzapfen 20 in der zugehörigen Lagerbohrung 21 des mit dem Werkzeugträger 1 verschraubten Kolbens 22 nicht nur abgedichtet drehbar, sondern auch begrenzt axial verschieblich gelagert. Die Gleitbüchse 24 trägt an einer dem Werkstückträger 1 zugewandten Ringfläche eine stirnseitige sogenannte Hirthverzahnung 45, die mit einer entsprechenden Hirthverzahnung 46a eines zu der Gleithülse 24 koaxialen, eine sogenannte Teilscheibe bildenden Zahnringes 46 zusammenwirkt, der an dem Werkstückträger 1 angeschraubt ist. Die mit dem Aufnahmestelle 13 starr verbundene Gleitbüchse 24 ist durch mehrere, rings um die Drehachse 12 gleichmäßig verteilt angeordnete Druckfedern 47 axial in dem Sinne beaufschlagt, dass die Druckfedern 47 bestrebt sind, die Gleithülse 24 mit ihrer Hirthverzahnung 45 aus der Hirthverzahnung 46a des Zahnrings 46 auszuheben. Der zwischen der Gleithülse 24 und dem Kolben 22 begrenzte Zylinderraum 23 ist über einen Durchgangskanal 48 in dem Kolben 22 und einen entsprechenden Stichkanal 49 an einen parallel zu der Längsmittelachse 3 verlaufenden Druckmediumversorgungskanal 50 in dem Werkstückträger 1 angeschlosen. Die vier Druckmediumsversorgungskanäle 50 der vier Reihen von Drehtischen 11 verlaufen parallel zu ebenfalls in dem Werkstückträger 1 vorgesehenen Druckmediumsversorgungskanälen 51 für die auf den Drehtischen 13 angeordneten Hydraulikzylinder 18. Sie sind über ein entsprechende Hydraulikanschlüsse enthaltendes Verbindungsstück 53 (Fig. 3 mit einem auf das Lagerteil 7 aufgesetzten Drehverteiler 54 verbunden, der einen Teil des CNC-Bearbeitungszentrums bildet und die gesteuerte Druckmediumsversorgung der Versorgungskanäle 50, 51 in dem Werkstückträger 1, unabhängig von der Drehwinkelstellung des Werkstückträgers 1, übernimmt.

Werden die Zylinderräume 23 der Drehtische 11 - oder wenigstens einer Drehtischreihe - drucklos gemacht, so können die Druckfedern 47 die Aufnahmeteller 13 anheben, womit die Hirthverzahnungen 45, 46a außer Eingriff kommen und die lagefeste Verriegelung der Aufnahmeteller 13 gelöst ist. Da die Stirnverzahnungen 25 der Gleithülsen 24 mit den Zwischenzahnrädern 26 in Eingriff bleiben, kann nunmehr durch eine entsprechende Relativverdrehung des Werkstückträgers 1 zu dem durch die Klemmhülse 36 drehfest fixierten Antriebszahnrad 35 eine gleiche synchrone Verdrehung aller Drehtische 11 um deren jeweilige Drehachse 12 bewirkt werden. Der Drehwinkelwert der Verdrehung jedes der Drehtische 11 steht in einem durch die Getriebeübersetzung vorgegebenen festen Verhältnis zu dem Drehwinkel der Relativdrehung des Werkstückträgers 1 bezüglich des Antriebszahnrades 35.

Sowie die jeweiligen Aufspannflächen 2 des Werkstückträgers 1 in die für die jeweilige Bearbeitungsstation richtige Winkelstellung überführt sind, werden die Zylinderkammern 23 der Drehtische 11 wieder mit Druckmedium beaufschlagt, womit die Gleithülsen 24 mit den Aufnahmetischen 13 nach unten gehen, die Hirthverzahnungen 45, 46a in Eingriff kommen und den jeweiligen Drehtische 11 lagefest bezüglich des Werkstückträgers 1 verriegeln. Da die Zahnflanken der Hirthverzahnung in bekannter Weise angeschrägt sind und die Hirthverzahnung somit selbstzentrierend ist, genügt es, dass die von dem Antriebszahnrad 35 den Verbindungszahnrädern 33 und die Zwischenzahnrädern 26, sowie den Stirnverzahnungen 25 gebildeten Getriebemittel die Drehtische 11 in die Nähe ihrer jeweiligen Soll-Position drehen derart, dass die Hirthverzahnungen 45, 46a bei der geschilderten Verriegelung der Aufnahmeteller 13 in Eingriff kommen können. Die exakte winkeligenaue Positionierung der Drehtische 11 und damit der Werkstücke 14 übernimmt die Hirthverzahnung.

Die Verriegelungseinrichtung könnte anstelle der erläuterten Hirthverzahnung 45, 46a auch andere formschlüssige Verriegelungselemente verwenden, die auch selbstzentrierend sein können. Beispiele dafür sind Indexbolzen, Keile, Prismen, etc., außerdem könnten die Aufnahmeteller 13 auch axial unverstellbar an dem Werkstückträger 1 gelagert und dafür die zugeordneten Zahnringe 46 axial beweglich sein.

Nach Abschluß des jeweiligen Schaltvorgangs des Werkstückträgers 1, d.h. nach Überführung jeder Reihe von Drehtischen 11 in die jeweilige Bearbeitungsstation des CNC-Bearbeitungszentrums muss sichergestellt sein, dass die Drehtische 11 und die darauf gespannten Werkstücke 14 gegen den Werkstückträger 1 einwandfrei lagerichtig verriegelt sind, bevor die Werkzeuge ihre Bearbeitung beginnen und damit Bearbeitungskräfte auf die Werkstücke 14 ausgeübt werden. Die Mehrfach-Spannvorrichtung enthält deshalb eine Abfrageeinrichtung, die feststellt, ob alle Rundtische 11 nach der Beaufschlagung ihrer Zylinderräume 23 mit Druckmedium, auch einwandfrei über ihre Hirthverzahnungen 45, 46a verriegelt sind.

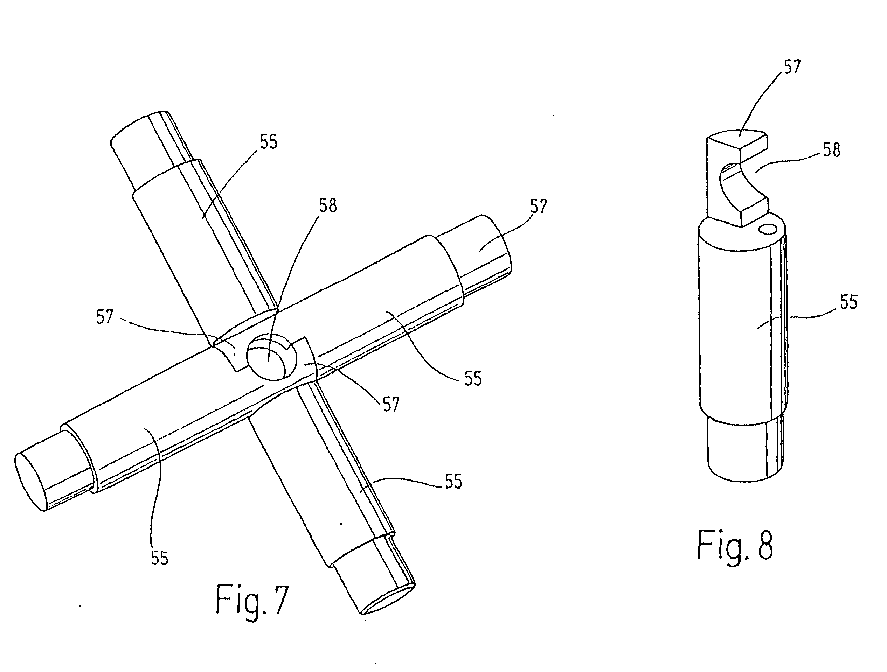

Diese Abfrageeinrichtung weist Abfrageelemente in Gestalt von zylindrischen Abfragebolzen oder -schiebern 55 auf, die in zugeordneten zu der Lagerbohrung 21 des jeweiligen Drehtisches 11 koaxialen Bohrungen 56 des Werkstückträgers 1 längsverschieblich gelagert sind. Jeder Abfrageschieber 55 liegt stirnseitig an dem Lagerzapfen 20 des zugeordneten Aufnahmetellers 13 an und tastet somic dessen axiale Stellung bezüglich des Werkstückträgers 1 ab. Da die Drehtische 11 der vier Drehtischreihen, wie bereits früher erläutert, jeweils in zueinander parallelen Querebenen liegen, die die Längsmittelachse 3 des werkstückträgers 1 rechtwinklig schneiden, liegen auch immer vier Abfragschieber 55 in kreuzartiger Anordnung in einer solchen Querebene, wie dies in Fig. 7 veranschaulicht ist. Jeder der Abfrageschieber 55 trägt auf seiner in dem Werkstückträger 1 nach innen weisenden Stirnseite ein angeformtes Kulissenteil 57, das lediglich bis zu der jeweiligen Längsmittelebene des Abfrageschiebers reicht und nur einen Quadranten dessen kreisförmiger Stirnfläche einnimmt. Das Kulissenteil 57 ist mit einer durchgehenden, halbzylinderförmigen Ausnehmung 58 versehen (vergleiche Fig. 8), die rechtwinklig zu der Längsmittelachse des Abfrageschiebers 55 verläuft.

Wenn die vier mit ihren Drehachsen 12 in einer gemeinsamen Querebene liegenden Aufnahmeteller 13 alle ordnungsgemäß in ihrer gegenüber dem Werkstückträger 1 abgesenkten Verriegelungsstellung stehen, sind die vier zugehörigen Abfrageschieber 55 in der aus Fig. 7 ersichtlichten Weise so zusammengeschoben, dass ihre vier halbzylindrischen Ausnehmungen 58 sich zu einer durchgehenden, zylindrischen Bohrung ergänzen, die im Schnittpunkt der Diagonalen der quadratischen Querschnittsform des Werkstückträgers 1 liegt. Sollte einer der Drehtische 11 mit seinen Hirthverzahnungen 45, 46a nicht oder nicht ganz in Eingriff stehen, so ist der entsprechende Abfrageschieber 55 gegenüber den anderen drei Abfrageschiebern 55 axial entsprechend verschoben, mit der Folge, dass sich die vier halbzylindrischen Ausnehmungen 58 nicht mehr zu einer Durchgangsbohrung ergänzen, sondern deren Querschnitt teilweise verlegen.

Zwischen den einander gegenüberliegenden Abfrageschieben 55 vorgesehene Druckfedern 59 (Fig. 5, 6) halten die Abfrageschieber 55 unter Vorspannung in stirnseitiger Anlage an den Lagerzapfen 20 der Aufnahmeteller 13.

In einer zu der Längsmittelachse 3 koaxialen Längsbohrung 60 des Werkstückträgers 1 ist eine Abfragestange 61 längsverschieblich gelagert. Die Abfragestange 61, die in der aus Fig. 4 ersichtlichen Weise auf der Seite des Verbindungsflansches 4 aus dem Werkstückkörper 1 vorragt, ist durch den Aufnahmezapfen 5 durchgeführt und mit einem Betätigungszylinder 62 gekoppelt, welcher auf einem ortsfesten Halter 63 sitzt und die Abfragestange 61 bezüglich des Werkstückkörpers 1 axial verstellen kann. Dem Betätigungszylinder 62 ist ein bei 630 angedeuteter Stellungssensor zugeordnet, der abhängig von der axialen Stellung der Abfragestange 61 ein Kontrollsignal an die Steuerung des CNC-Bearbeitungszentrums abgibt.

Die Abfragestange 61 ist durch die halbzylindrischen Ausnehmungen 58 aller Abfrageschieber 55 durchgeführt. Sie weist an jeder Kreuzungsstelle von jeweils vier Abfrageschiebern 55 einen Abschnitt 64 verminderten Durchmesser auf, dessen axiale Länge etwa dem Durchmesser einer Bohrung 56 entspricht. Die Durchmesserverringerung in dem Abschnitt 64 ist im Vergleich zu dem Durchmesser der halbzylindrischen Ausnehmungen 58 der Abfrageschieber 55 so gewählt, dass die zum Entriegeln der Hirthverzahnungen 45, 46a der Drehtische 11 erforderliche Axialbewegung deren Aufnahmeteller 13 unbehindert ist. Kehren bei der anschließenden Wiederverriegelung alle 4 Abfrageschieber 55 jeder Kreuzungsstelle wieder in den Endzustand nach Fig. 7 zurück, so bilden die halbzylindrischen Ausnehmungen 58 der vier zusammenwirkenden Abfrageschieber 55 eine vollständige Durchgangsbohrung durch die die Abfragestange 61 in einer axialen Abfragebewegung durch den Berätigungszylinder 62, bezogen auf Fig. 4, nach links mit ihrem ungeschwächten, etwa den Durchmesser der Durchgangsbohrung aufweisenden Teil durchgeschoben werden kann. Damit meldet der Sensor 630, dass alle Drehtische 11 ordnungsgemäß verriegelt sind.

Sollte aber einer der Drehtische 11 bei der Verriegelung hängen geblieben sein, so ist die von seinem Abfrageschieber 55 zusammen mit den drei ihm zugeordneten Abfrageschiebern 55 an der entsprechenden Kreuzungsstelle zusammengesetzte Durchgangsbohrung teilweise verlegt. Die Abfragestange 61 läuft mit ihrer den Abschnitt 64 begrenzenden Schulter 65 (Fig. 6) auf das Kulissenceil 57 des Abfrageschiebers 55 des nicht ordnungsgemäß verriegelten Drehtisches 11 auf und kann nicht weiter bewegt werden. Der Sensor 630 meldet deshalb das Vorliegen eines Fehlerzustandes an seine Steuereinheit.

Die Abfrageeinrichtung könnte grundsätzlich auch mit elektrischen, pneumatischen oder hydraulischen Abfragelementen oder Sensoren arbeiten, die den einzelnen Drehtischen 11 oder Reihen bzw. Gruppen dieser Drehtische 11 zugeordnet sind.

Schließlich wäre es auch denkbar dem Elektrogetriebemotor 43 in Fig. 3 durch eine andere Antriebsquelle zu ersetzen. Das Antriebszahnrad 35 könnte mit der koaxial angeordneten Hohlwelle eines Rundschalttisches verbunden sein, der das Antriebszahnrad 35 antreibt. Die Ausführungsform zeichnet sich durch eine besonders einfache und platzsparende Konstruktion aus. Der Rundschalttisch tritt an die Stelle der Teile 36 bis 40 der Fig. 3 und ist mit der Lageraufnahme 9 verbunden.

## Patentansprüche

1. Mehrfach-Spannvorrichtung für mehrseitig zu bearbeitende Werkstücke, mit
- einem länglichen, im Querschnitt polygonalen Werkstückträger (1), der wenigstens zwei parallel zu seiner Längsmittelachse (3) verlaufende Aufspannflächen (2) trägt und an wenigstens einer Seite in ortsfesten Lagermitteln (5, 9) um seine Längsmittelachse um 360° drehbar gelagert ist,
- mit einer Anzahl von zur Werkstückaufnahme eingerichteten Drehtischen (11), die jeweils um eine Drehachse (12) drehbar und in vorgegebenen Winkellagen relativ zu dem Werkstückträger (1) ortsfest verriegelbar an diesem drehbar gelagert sind, wobei auf jeder Aufspannfläche (2) wenigstens zwei Drehtische (11) in einer Reihe nebeneinander angeordnet sind und mit ihren Drehachsen (12) in einer gemeinsamen, zu der Längsmittelachse des Werkstückträgers (3) parallelen oder diese enthaltenden Ebene liegen,**gekennzeichnet durch** Getriebemittel (25, 26, 33), **durch** die alle Drehtische miteinander und mit einer gemeinsamen Antriebsquelle (35; 43) formschlüssig gekuppelt sind, wobei die Getriebemittel in Abhängigkeit von einer Drehbewegung des Werkstückträgers (1) um seine Längsmittelachse (3) relativ zu den ortsfesten Lagermitteln, derart antreibbar sind, dass alle Drehtische um ihre jeweilige Drehachse um einen Drehwinkel verdreht werden, der zumindest näherungsweise in einem festen Verhältnis zu dem Drehwinkel steht um den der Werkstückträger (1) um seine Längsmittelachse gedreht wird.

2. Spannvorrichtung nach Anspruch 1, **dadurch gekennzeichnet, dass** die gemeinsame Antriebsquelle ein zentrales Antriebszahnrad (35) aufweist, mit dem die Getriebemittel (25, 26, 33) in Eingriff stehen und das relativ zu den Lagermitteln drehfest fixierbar ist und dass der Werkstückträger (1) relativ zu dem Antriebszahnrad (35) verdrehbar gelagert ist.

3. Spannvorrichtung nach Anspruch 2, **dadurch gekennzeichnet, dass** das drehbar gelagerte Antriebszahnrad (35) durch eine gesteuerte Feststelleinrichtung (36) drehfest fixierbar ist.

4. Spannvorrichtung nach Anspruch 2 oder 3, **dadurch gekennzeichnet, dass** dem Antriebszahnrad (35) eine Antriebseinrichtung (43) zugeordnet ist, durch die es unter Antrieb aller Drehtische (11) relativ zu dem Werkstückträger (1) in Umdrehung versetzbar ist.

5. Spannvorrichtung nach einem der vorhergehenden Ansprüche, **dadurch gekennzeichnet, dass** jedem Drehtisch (11) eine formschlüssige Verriegelungseinrichtung an dem Werkscückträger (1) zugeordnet ist, durch die er in einer vorgegebenen Drehwinkelstellung relativ zu dem Werkscückträger (1) lagegenau verriegelbar ist.

6. Spannvorrichtung nach Anspruch 5, **dadurch gekennzeichnet, dass** die Verriegelungseinrichtung eine Hirthverzahnung (45, 46a) aufweist von der ein Teil axial begrenzt verstellbar an dem Werkstückträger (1) gelagert ist.

7. Spannvorrichtung nach einem der Ansprüche 5 oder 6, **dadurch gekennzeichnet, dass** allen Drehtischen (11) eine Abfrageeinrichtung zugeordnet ist, durch die der Verriegelungszustand aller Drehtische abfragbar ist.

8. Spannvorrichtung nach den Ansprüchen 6 und 7, **dadurch gekennzeichnet, dass** die Abfrageeinrichtung eine in dem Werkstückträger (1) längsverschieblich gelagerte Stange (61) aufweist, die mit stellungsabhängig von den Drehtischen oder deren Verriegelungselementen gesteuerten Abfrageelementen (55) an den einzelnen Drehtischen zusammenwirkt.

9. Spannvorrichtung nach Anspruch 8, **dadurch gekennzeichnet, dass** die Abfrageelemente in dem Werkstückträger gelagerte Kulissenteile (57) aufweisen, die in Abhängigkeit von einer Hub- und Senkbewegung der Drehtische (11) oder eines Teiles (45) der Verriegelungseinrichtung zwangsläufig gesteuert sind und dass die in dem Werkstückträger verschieblich gelagerte Stange (61) mit den Kulissenteilen zusammenwirkende Abschnitte (64) aufweist.

10. Spannvorrichtung nach einem der vorhergehenden Ansprüche, **dadurch gekennzeichnet, dass** die auf den Aufspannflächen (2) des Werkstückträgers (1) reihenweise angeordneten Drehtische (11) mit ihren Drehachsen (12) jeweils in voneinander beabstandeten, parallelen Querebenen liegen, die rechtwinklig zu der Längsmittelachse (3) des Werkscückträgers (1) verlaufen.

## Claims

1. Multiple clamping device for workpieces to be machined on multiple sides, with
- an elongated workpiece holder (1) with a polygonal cross-section, which bears at least two clamping surfaces (2) running parallel to its longitudinal central axis and on at least one side is disposed in fixed bearing elements (5, 9) to be rotatable 360° around its longitudinal central axis,
- with a number of rotary tables (11) fitted to receive workpieces, said rotary tables being rotatable respectively around a rotational axis (12) and disposed so that they may be fixedly locked in given angle positions relative to the workpiece holder (1) to be rotatable thereon, wherein on each clamping surface (2) at least two rotary tables (11) are arranged in a row next to one another and with their rotational axes (12) lie in a common plane parallel to the longitudinal central axis (3) of the workpiece holder or a plane containing this axis, **characterised by**
gear elements (25, 26, 33), by means of which all the rotary tables are positively coupled to one another and to a joint drive source (35; 43), wherein the gear elements may be driven in dependence on a rotational movement of the workpiece holder (1) about its longitudinal central axis (3) relative to the fixed bearing means in such a manner that all the rotary tables are rotated relatively about their respective rotational axis around an angle of rotation, which at least approximately stands in a fixed ratio to the angle of rotation, around which the workpiece holder (1) is rotated about its longitudinal central axis.

2. Clamping device according to Claim 1, **characterised in that** the joint drive source has a central drive gear wheel (35), with which the gear elements (25, 26, 33) mesh and which may be fixed against rotation relative to the bearing means, and that the workpiece holder (1) is disposed to rotate relative to the drive gear wheel (35).

3. Clamping device according to Claim 2, **characterised in that** the rotationally disposed drive gear wheel (35) may be fixed against rotation by a controlled fixing means (36).

4. Clamping device according to Claim 2 or 3, **characterised in that** the drive gear wheel (35) has an associated drive means (43), through which it may be set in rotation to drive all the rotary tables (11) relative to the workpiece holder (1).

5. Clamping device according to one of the preceding claims, **characterised in that** each rotary table (11) has an associated positive locking means on the workpiece holder (1), through which it may be locked precisely in position at a predetermined rotational angle relative to the workpiece holder (1).

6. Clamping device according to Claim 5, **characterised in that** the locking means has a serration (45, 46a), part of which is disposed on the workpiece holder (1) to be adjustable in an axially restricted manner.

7. Clamping device according to one of Claims 5 or 6, **characterised in that** all the rotary tables (11) have an associated scanning means, through which the locking state of all the rotary tables can be scanned.

8. Clamping device according to Claims 6 and 7, **characterised in that** the scanning means has a rod (61), which is disposed to be longitudinally displaceable in the workpiece holder (1) and which interacts with scanning elements (55) on the individual rotary tables controlled in dependence on position by the rotary tables or their locking elements.

9. Clamping device according to Claim 8, **characterised in that** the scanning elements have link parts (57), which are forcibly controlled in dependence on a raising and lowering movement of the rotary tables (11) or a part (45) of the locking means, and that the rod (61) displaceably disposed in the workpiece holder has sections (64) interacting with the link parts.

10. Clamping device according to one of the preceding claims, **characterised in that** the rotary tables (11), which are arranged in rows on the clamping surfaces (2) of the work piece holder (1), respectively lie with their rotational axes (12) in parallel transverse planes spaced from one another, which run at right angles to the longitudinal central axis (3) of the workpiece holder (1).

## Revendications

1. Dispositif de serrage multiple pour des pièces à usiner sur plusieurs faces, comprenant
un porte-pièces (1) allongé à section transversale polygonale, qui comporte au moins deux surfaces de bridage (2) parallèles à son axe médian longitudinal (3) et qui, d'un côté au moins, est monté avec possibilité de rotation de 360° autour de son axe médian longitudinal (3) dans des moyens de support (5, 9) stationnaires,
un certain nombre de tables rotatives (11) agencées pour recevoir des pièces, qui sont montées tournantes autour d'un axe de rotation (12) sur le porte-pièces (1) et peuvent être bloquées dans des positions angulaires prédéterminées par rapport à celui-ci, au moins deux tables rotatives (11) étant disposées en ligne sur chaque surface de bridage (2) et leurs axes de rotation (12) étant situés dans un plan commun parallèle à l'axe longitudinal (3) du porte-pièces (1) ou contenant celui-ci,
**caractérisé par** des moyens de transmission (25, 26, 33) par l'intermédiaire desquels toutes les tables rotatives sont couplées par complémentarité de formes entre elles et à une source d'entraînement commune (35, 43), les moyens de transmission, en fonction d'un mouvement de rotation du porte-pièces (1) autour de son axe longitudinal (3) par rapport aux moyens de support (5, 9) stationnaires, pouvant être entraînés d'une manière telle que toutes les tables rotatives tournent autour de leur axe de rotation d'un angle de rotation qui est au moins approximativement dans un rapport fixe avec l'angle de rotation du porte-pièces (1) autour de son axe médian longitudinal.

2. Dispositif de serrage selon la revendication 1, **caractérisé par le fait que** la source d'entraînement commune comporte un pignon d'entraînement (35) central avec lequel les moyens de transmission (25, 26, 33) sont en prise et qui peut être bloqué en rotation par rapport aux moyens de support et **par le fait que** le porte-pièces (1) est monté tournant par rapport au pignon d'entraînement (35).

3. Dispositif de serrage selon la revendication 2, **caractérisé par le fait que** le pignon d'entraînement (35) monté tournant peut être bloqué en rotation à l'aide d'un dispositif de blocage (36) commandé.

4. Dispositif de serrage selon la revendication 2 ou 3, **caractérisé par le fait qu'**au pignon d'entraînement (35) est associé un dispositif d'entraînement (43) par l'intermédiaire duquel ledit pignon peut être mis en rotation par rapport au porte-pièces (1), entraînant ainsi toutes les tables rotatives (11).

5. Dispositif de serrage selon une des revendications précédentes, **caractérisé par le fait qu'**à chaque table rotative (11) est associé un dispositif de verrouillage par obstacle sur le porte-pièce (1), par l'intermédiaire duquel ladite table rotative peut être verrouillée de manière précise dans une position angulaire prédéterminée par rapport au porte-pièces (1).

6. Dispositif de serrage selon la revendication 5, **caractérisé par le fait que** le dispositif de verrouillage présente une denture de Hirth (45, 46a), dont une partie est montée sur le porte-pièces (1) avec possibilité de déplacement limité dans la direction axiale.

7. Dispositif de serrage selon une des revendications 5 ou 6, **caractérisé par le fait qu'**à toutes les tables rotatives (11) est associé un dispositif de palpage par l'intermédiaire duquel l'état de verrouillage de toutes les tables rotatives peut être interrogé.

8. Dispositif de serrage selon les revendications 6 et 7, **caractérisé par le fait que** le dispositif palpage présente une tige (61) montée coulissante dans la direction longitudinale dans le porte-pièces (1), qui coopère avec des éléments de palpage (55) commandés en fonction de la position des tables rotatives ou des éléments de verrouillage de celles-ci.

9. Dispositif de serrage selon la revendication 8, **caractérisé par le fait que** les éléments d'interrogation (55) comportent des coulisses (57) montées dans le porte-pièces (1), qui sont commandées automatiquement en fonction d'un mouvement de montée - descente des tables rotatives (11) ou d'un élément (45) du dispositif de verrouillage et **par le fait que** la tige (61) montée coulissante dans le porte-pièces (1) comporte des segments (64) qui coopèrent avec les coulisses.

10. Dispositif de serrage selon une des revendications précédentes, **caractérisé par le fait que** les axes de rotation (12) des tables rotatives (1), disposées en ligne sur les surfaces de bridage (2) du porte-pièces (1), sont situés dans des plans transversaux mutuellement espacés et parallèles, qui s'étendent perpendiculairement à l'axe médian longitudinal (3) du porte-pièces (1).
